# EUROPÄISCHE PATENTSCHRIFT

(11) **EP 2 369 434 B1**
(45) Veröffentlichungstag und Bekanntmachung des Hinweises auf die Patenterteilung: **21.05.2014**
(21) Anmeldenummer: 10157981.1
(22) Anmeldetag: 26.03.2010
(51) Int. Cl.: G05B 19/4097

(54) **Verfahren zum automatischen Abtragen eines Materialvolumens**
Method for automatic removal of a material volume
Procédé d'enlèvement automatique d'un volume de matériau

(43) Veröffentlichungstag der Anmeldung: 28.09.2011
(73) Patentinhaber: Meyer-Theilinger, Richard, 90425 Nürnberg (DE)
(72) Erfinder: Meyer-Theilinger, Richard, 90425, Nürnberg (DE); Dvoishes, Vassiliy, 90489, Nürnberg (DE); Schaller, Tobias, 90419, Nürnberg (DE)
(74) Vertreter: Lösch, Christoph Ludwig Klaus

(56) Entgegenhaltungen:
- EP-A2- 2 082 850
- WO-A2-2009/105221
- DE-A1- 10 346 589
- DE-A1- 19 945 801
- US-A1- 2006 181 236
- NIROSH JAYAWEERA, PHIL WEBB: "Measurement Assisted Automated Robotic Edge Deburring of Complex Components" PROCEEDINGS OF THE 9 WSEAS INTERNATIONAL CONFERENCE ON SIGNAL PROCESSING, ROBOTICS AND AUTOMATION - ISPRA 2010, 20. Februar 2010 (2010-02-20), - 22. Januar 2010 (2010-01-22) Seiten 133-138, XP002601057 ISBN: 978-960-474-157-1

## Beschreibung

Die Erfindung betrifft ein Verfahren zum automatischen Abtragen mindestens eines Materialvolumens eines Bauteils durch ein maschinengesteuertes Werkzeug, das sich entlang von vorgegebenen Werkzeugbahnen mit einer Mehrzahl von Bearbeitungspunkten bewegt.

Maschinengesteuerte Werkzeuge sind in der Fertigungstechnik allgemein bekannt. Eingespannt beispielsweise in einen Roboterarm oder in ein Bearbeitungszentrum bewegt sich das Werkzeug entsprechend den von der Maschinensteuerung empfangenen Befehlen.

Insbesondere bei Bauteilen, die bedingt durch Fertigungsverfahren relativ große Maß- und Formtoleranzen und unvorhersehbare Formabweichungen aufweisen, kann das Angleichen unvorhergesehener und unerwünschter Abweichungen an die individuelle Bauteilgeometrie nicht oder nur ungenügend automatisiert durch derartige maschinengesteuerte Werkzeuge erfolgen. Das Bearbeiten erfolgt bislang manuell und wird von Arbeitern durchgeführt, die mit geeigneten Handarbeitswerkzeugen anhand ihrer Erfahrung und Routine diese Bauteile bearbeiten. Ein derartiges manuelles Bearbeiten ist beispielsweise - aber nicht ausschließlich - bei Bauteilen nötig, die durch das Urformverfahren Gießen hergestellt werden. Im Fall von Gussstücken wären derartige Materialvolumen, die abzutragen wären, beispielsweise Formausbrüche, Formversätze, Grate an Bauteilkanten und/oder Zunder.

Problematisch ist hierbei beispielsweise, dass die Arbeiter beim manuellen Bearbeiten Staub, Lärm, hohem Kraftaufwand und hohen

Bearbeitungskräften der Handwerkzeuge sowie unergonomischen Arbeitsbedingungen ausgesetzt sind. Durch das manuelle Ausführen ist der bestehende Vorgang außerdem sehr zeit- und kostenintensiv. Außerdem wird durch das manuelle Bearbeiten der in der Regel oft stark automatisierte Fertigungsablauf unterbrochen, was nicht im Sinne einer effektiven und schlanken Produktion ist.

Das Dokument US 2006/181236 A1 beschreibt ein Verfahren zur automatischen Anpassung von Soll-Werkzeugbahnen, wobei Verschiebungsvektoren zwischen Bauteilbereichen, wie Teilflächen oder Teilkanten, eines CAD-Modells des Bauteils und den vermessenen korrespondierenden Bauteilbereichen bestimmt werden und damit die entsprechende Verschiebung der Soll-Werkzeugbahnen ermittelt und korrigiert wird.

Der Erfindung liegt daher die Aufgabe zu Grunde, ein Verfahren anzubieten, das ein zuverlässiges und exaktes automatisiertes Abtragen von unerwünschten Materialvolumen eines Bauteils ermöglicht.

Diese Aufgabe wird durch ein Verfahren mit den Merkmalen des Patentanspruchs 1 gelöst. Vorteilhafte Ausführungsformen des Verfahrens sind in den Unteransprüchen beschrieben.

Erfindungsgemäß weist das Verfahren zum automatischen Abtragen mindestens eines Materialvolumens eines Bauteils durch ein maschinengesteuertes Werkzeug, das sich entlang von vorgegebenen Werkzeugbahnen mit einer Mehrzahl von Bearbeitungspunkten bewegt, folgende Verfahrensschritte auf:
- Erfassen eines virtuellen Soll-Abbildes des Bauteils mit mindestens einer Soll-Werkzeugbahn mit einer Mehrzahl von Soll-Bearbeitungspunkten zur Abtragung des Materialvolumens;
- Erfassen eines digitalisierten Bauteilbereichs, der mindestens das abzutragende Materialvolumen und einen daran angrenzenden Umgebungsbereich des Bauteils umfasst;
- Bestimmen eines Verschiebungsvektors für jeden Bearbeitungspunkt;
- Bestimmen einer angepassten Werkzeugbahn durch Anwendung des Verschiebungsvektors auf den jeweiligen Bearbeitungspunkt;
dadurch gekennzeichnet, dass der Verschiebungsvektor ein Datensatz ist, der die Lageabweichung zwischen dem Umgebungsbereich des digitalisierten Bauteilbereichs und einem korrespondierenden Ausschnitt aus dem virtuellen Soll-Abbild am Soll-Bearbeitungspunkt wiedergibt; und wobei die angepasste Werkzeugbahn durch folgende Verfahrensschritte bestimmt wird:
a) Erzeugung eines zweidimensionalen Schnitts im virtuellen Soll-Abbild durch einen Punkt auf der Soll-Werkzeugbahn senkrecht zur Soll-Werkzeugbahn, wobei eine geschnittene Bauteilkontur als Umgebungsbereich des Soll-Abbilds entsteht;
b) Erzeugen eines zweidimensionalen Schnitts durch den digitalisierten Bauteilbereith in einer zum Schnitt aus dem Verfahrensschritt a) korrespondierenden Schnittebene, wobei eine korrespondierende geschnittene Bauteilkontur als Umgebungsbereich des digitalisierten Bauteilbereichs entsteht;
c) Bestimmung des Verschiebungsvektors für jeden Bearbeitungspunkt als Verschiebung zwischen dem Umgebungsbereich aus Verfahrensschritt b) und dem Umgebungsbereich aus Verfahrensschritt a);
d) Wiederholen der Verfahrensschritte a) bis c) für eine Mehrzahl von Soll-Bearbeitungspunkten entlang der Soll-Werkzeugbahn.

In vorteilhafter Weise wird zum Abtragen des Materialvolumens ein Fräser, z.B. ein Kegelfräser, ein Brenner oder ein Schleifkörper eingesetzt. Diese Werkzeuge können durch einen Industrieroboter gesteuert sein.

Unter dem virtuellen Soll-Abbild des Bauteils wird hierbei ein Computermodell des zu fertigenden Bauteils, beispielsweise aus einem CAD(Computer Aided Design)- und/oder CAM(Computer Aided Manufacturing)-Softwarepaket, verstanden. Das hier zur Anwendung kommende Soll-Abbild weist neben der eigentlichen Bauteilgeometrie noch mindestens eine Soll-Werkzeugbahn auf. Diese Soll-Werkzeugbahn entspricht der Werkzeugbahn entlang der das Werkzeug bewegt werden müsste, um das abzutragende Materialvolumen vom Soll-Bauteil zu entfernen. Derartige Soll-Werkzeugbahnen können von einem CAM-Softwarepaket erzeugt werden.

Der digitalisierte Bauteilbereich kann beispielsweise durch Scannen und anschließendes Digitalisieren des Bauteils bzw. einzelner Bauteilbereiche erhalten werden. Beispielsweise kann das Bauteil mit Hilfe eines 3D-Scanner-Systems derart vermessen werden, dass sich aus den Daten ein 3D-Modell generieren lässt. Mittels geeigneter Software kann dieser Datensatz - falls nötig - aufbereitet werden, so dass eventuell entstandene Fehlstellen im Datensatz geschlossen werden.

Unter dem Umgebungsbereich werden hierbei Bauteilkonturen verstanden, die an das zu entfernende Materialvolumen angrenzen. Dabei stellt der Umgebungsbereich eine Untermenge des Gesamtbauteils dar. Insbesondere können für den Umgebungsbereich Bauteilkonturen verwendet werden, die mit einer hohen Wahrscheinlichkeit keine Oberflächenfehler oder Ungenauigkeiten aufweisen.

Der Verschiebungsvektor ist nun ein Datensatz, der die Lageabweichung zwischen diesem Umgebungsbereich des digitalisierten Bauteilbereichs und einem korrespondieren Ausschnitt aus dem virtuellen Soll-Abbild für einen Bearbeitungspunkt wiedergibt. Mit anderen Worten beschreibt der Verschiebungsvektor die Verschiebung, um die der Umgebungsbereich des digitalisierten Bauteilbereichs und/oder der diesem Umgebungsbereich korrespondierende Ausschnitt des Soll-Abbildes zueinander verschoben werden müssen, um miteinander in Deckung gebracht zu werden. Ein derartiger Verschiebungsvektor wird für eine Mehrzahl von Bearbeitungspunkten auf der Werkzeugbahn bestimmt. Auf diese Weise ist es möglich, die lokal in dem jeweiligen Bearbeitungspunkt auftretenden Unterschiede zwischen virtuellem Soll-Abbild und dem tatsächlichen digitalisierten Bauteil zu berücksichtigen. Aufbauend auf den jeweiligen Verschiebungsvektoren der einzelnen Bearbeitungspunkte wird daraufhin eine angepasste Werkzeugbahn durch Verschieben des Soll-Bearbeitungspunktes der Soll-Werkzeugbahn um den jeweiligen zugehörigen Verschiebungsvektor erzeugt. Die sich hieraus ergebende angepasste Werkzeugbahn kann anschließend als Grundlage für die Bewegung des Werkzeugs dienen.

Da zur Bestimmung der Verschiebungsvektoren jeweils nur der Umgebungsbereich des zu entfernenden Materialvolumens und nicht das Gesamtbauteil berücksichtigt wird, wird eine Adaptivität in dem Sinne erzeugt, dass das zu entfernende Materialvolumen unabhängig von der Lage der umgebenden Bauteilbereiche relativ zum Gesamtbauteil zuverlässig entfernt werden kann. Ferner kann dadurch zuverlässig unterschieden werden, was eine tatsächliche Bauteilkontur ist und was lediglich eine ungewollte Formabweichung ist, die es zu entfernen gilt.

Weitere wichtige Merkmale und Vorteile der Erfindung ergeben sich aus den Unteransprüchen, aus den Zeichnungen und aus der zugehörigen Figurenbeschreibung. Es versteht sich, dass die vorstehend genannten Merkmale und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungsfiguren weiter erläutert. Es zeigen, jeweils schematisch,
- Fig. 1: ein Flussdiagramm eines Verfahrens zum Abtragen eines Materialvolumens eines Bauteils durch ein maschinengesteuertes Werkzeug;
- Fig. 2: ein Flussdiagramm der erfindungsgemäßen Bestimmung der angepassten Werkzeugbahn;
- Fig. 3: eine Schaubild mit einem 2D-Schnitt im virtuellen Soll-Abbild und ein 2D-Schnitt im digitalisierten Bauteilbereich zur Visualisierung der erfindungsgemäßen Bestimmung der angepassten Werkzeugbahn;
- Fig. 4: ein Flussdiagramm einer ersten Variante zur Bestimmung der angepassten Werkzeugbahn;
- Fig. 5: ein Flussdiagramm einer zweiten Variante zur Bestimmung der angepassten Werkzeugbahn;
- Fig. 6: eine Darstellung eines virtuell auf einer angepassten Werkzeugbahn positionierte Abbildung eines Werkzeugs;
- Fig. 7: eine Darstellung des virtuell auf der angepassten Werkzeugbahn positionierte Abbildung eines Werkzeugs mit einer positiven Schnittmenge mit dem abzutragenden Materialvolumen;
- Fig. 8: eine Darstellung, die ein Verfahren zum Abtragen von Materialvolumen zum Angleichen einer Stufe im Bauteil visualisiert.

In den im Folgenden beschriebenen Ausführungsformen werden gleiche bzw. gleichwirkende Teile und Verfahrensschritte mit gleichen Bezugszeichen versehen, wobei die in der gesamten Beschreibung enthaltenen Offenbarungen sinngemäß auf gleiche Teile bzw. gleiche Verfahrensschritte mit gleichen Bezugszeichen übertragen werden können.

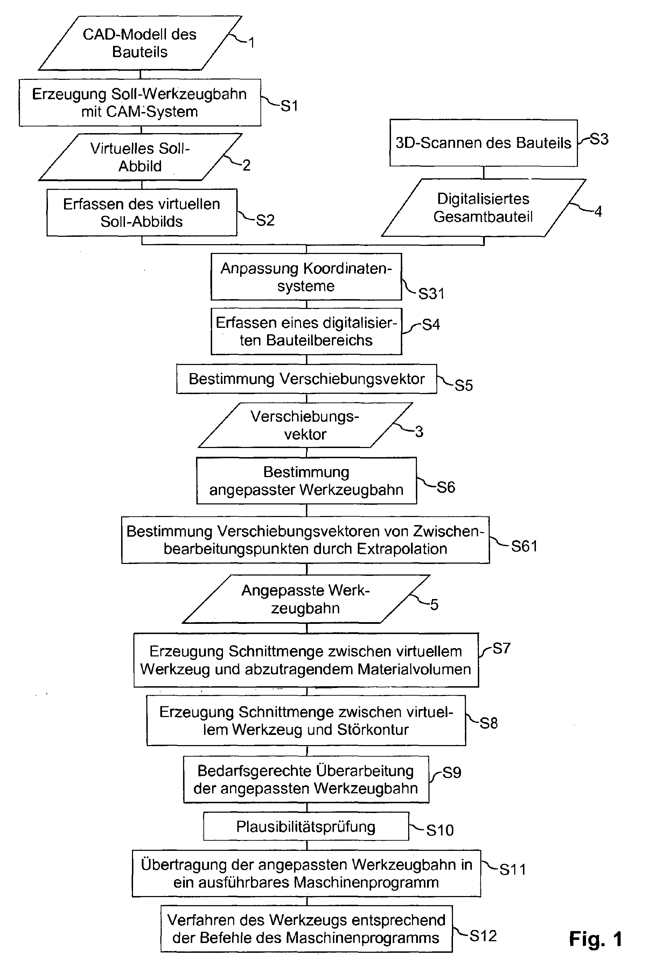

Figur 1 zeigt ein Flussdiagramm eines Verfahrens zum Abtragen eines Materialvolumens eines Bauteils durch ein maschinengesteuertes Werkzeug.

Ausgehend von einem CAD-Modell 1 des Bauteils wird beispielsweise mit Hilfe eines CAM-Systems mindestens eine Soll-Werkzeugbahn erzeugt (Verfahrensschritt S1). Diese Soll-Werkzeugbahn entspricht einer Bahn entlang der ein Werkzeug zum Abtragen eines Bauteilvolumens (z.B. Fase, Grat, Formausbruch, Zunder) bewegt werden sollte, wenn das konkret gefertigte Bauteil dem CAD-Modell 1 in idealer Weise entsprechen würde. Das um mindestens eine Soll-Werkzeugbahn ergänzte CAD-Modell 1 entspricht dem virtuellen Soll-Abbild 2 des Bauteils. Es ist jedoch auch möglich ein bereits hinterlegtes Soll-Abbild 2 den weiteren Verfahrensschritten zugrunde zu legen. Das virtuelle Soll-Abbild 2 wird zur weiteren Verarbeitung beispielsweise durch Einlesen in einen Speicher erfasst (Verfahrensschritt S2), um dieses in den darauf folgenden Verfahrensschritten der Anpassung der Koordinatensysteme (Verfahrensschritt 31) und der Bestimmung des Verschiebungsvektors (Verfahrensschritt S5) zugrunde zu legen.

Daneben wird das Bauteil durch einen 3D-Scanner abgetastet (Verfahrensschritt S3) und digitalisiert. Bei dieser Digitalisierung des Gesamtbauteils 4 wird zumindest ein Großteil des Bauteils gescannt. Es ist jedoch in der Regel nicht nötig die komplette Oberfläche des Bauteils gänzlich zu digitalisieren. Einzelne Teile der Oberfläche - insbesondere in Bauteilbereichen, die relativ weit entfernt von dem abzutragenden Materialvolumen liegen - können relativ grob (d.h. mit Fehlstellen) gescannt werden.

Im anschließenden Verfahrensschritt S31 erfolgt eine Anpassung der Koordinatensysteme des virtuellen Soll-Abbilds 2 und des digitalisierten Gesamtbauteils 4, d.h. das Koordinatensystem des digitalisierten Gesamtbauteils 4 wird mit dem Koordinatensystem des virtuellen Soll-Abbildes 2 in Übereinstimmung gebracht. Hierzu kann man sich insbesondere eines sogenannten "Best-Fit"-Verfahrens bedienen, in dem das digitalisierte Bauteil und das virtuelle Soll-Abbild solange zueinander verdreht und/oder verschoben werden, bis eine größtmögliche Übereinstimmung zwischen den Bauteilen erreicht ist.

In vorteilhafter Weise erfolgt das Scannen in einer Einspannung, die der Einspannung entspricht, mit der das Werkzeug das abzutragende Materialvolumen später entfernt.

Außerdem kann nach der Anpassung der Koordinatensysteme eine Qualitätskontrolle durchgeführt werden, indem die Formabweichungen zwischen dem digitalisiertem Gesamtbauteil und dem virtuellen Soll-Abbild 2 untersucht werden und bei zu großen Abweichungen das vorliegende digitalisierte Bauteil nicht weiterverarbeitet, sondern aussortiert wird.

Aus dem digitalisierten Gesamtbauteil 4, dessen Koordinatensystem bei Bedarf in Verfahrensschritt S31 angepasst wurde, wird anschließend ein Teilbereich, nämlich der digitalisierte Bauteilbereich erfasst (Verfahrensschritt S4). Der digitalisierte Bauteilbereich umfasst dabei mindestens das abzutragende Materialvolumen und einen daran angerenzenden Umgebungsbereich des Bauteils.

Aus dem virtuellen Soll-Abbild 2 und dem eingelesenen bzw. erfassten Bauteilbereich, deren Koordinatensystem in Verfahrensschritt S31 angepasst wurden, wird in Verfahrensschritt S5 der Verschiebungsvektor 3 bestimmt. Der Verschiebungsvektor 3 gibt hierbei die Lageabweichung zwischen dem Umgebungsbereich des digitalisierten Bauteilbereichs und einem korrespondierenden Ausschnitt aus dem virtuellen Soll-Abbild 2 an einem Soll-Bearbeitungspunkt auf der Soll-Werkzeugbahn wieder. In Verfahrensschritt S6 wird dann eine angepasste Werkzeugbahn 5 durch Anwendung des Verschiebungsvektors 3 auf den Bearbeitungspunkt bestimmt. Da die Werkzeugbahn aus einer Mehrzahl von Bearbeitungspunkten besteht, wird für jeden Soll-Bearbeitungspunkt ein entsprechender Verschiebungsvektor 3 bestimmt. In anderen Worten entspricht die angepasste Werkzeugbahn 5 der Soll-Werkzeugbahn, deren einzelnen Soll-Bearbeitungspunkte jeweils um einen zugehörigen Verschiebungsvektor verschoben worden sind. Dadurch ist eine individuelle Anpassung der einzelnen Bearbeitungspunkte möglich.

In Verfahrensschritt S61 kann bei Bedarf eine Bestimmung von Verschiebungsvektoren von Zwischenbearbeitungspunkten durch Extrapolation von benachbarten Bearbeitungspunkten erfolgen. Unter einem Zwischenbearbeitungspunkt wird hierbei ein oder mehrere Punkte auf der Werkzeugbahn verstanden, für den kein Verschiebungsvektor nach dem oben beschriebenen Verfahren bestimmt worden ist, und der zwischen zwei Bearbeitungspunkten liegt. Die Nichtbestimmung kann beispielsweise darin begründet sein, dass aufgrund von fehlgeschlagenen Bestimmungsstrategien an separaten Bearbeitungspunkten oder aufgrund einer lückenhaften Bauteildigitalisierung in diesem Punkt kein Verschiebungsvektor bestimmt werden kann. Für einen derartigen Zwischenbearbeitungspunkt wird in Verfahrensschritt S61 ein Verschiebungsvektor durch Extrapolation der Verschiebungsvektoren benachbart liegender Bearbeitungspunkte bestimmt.

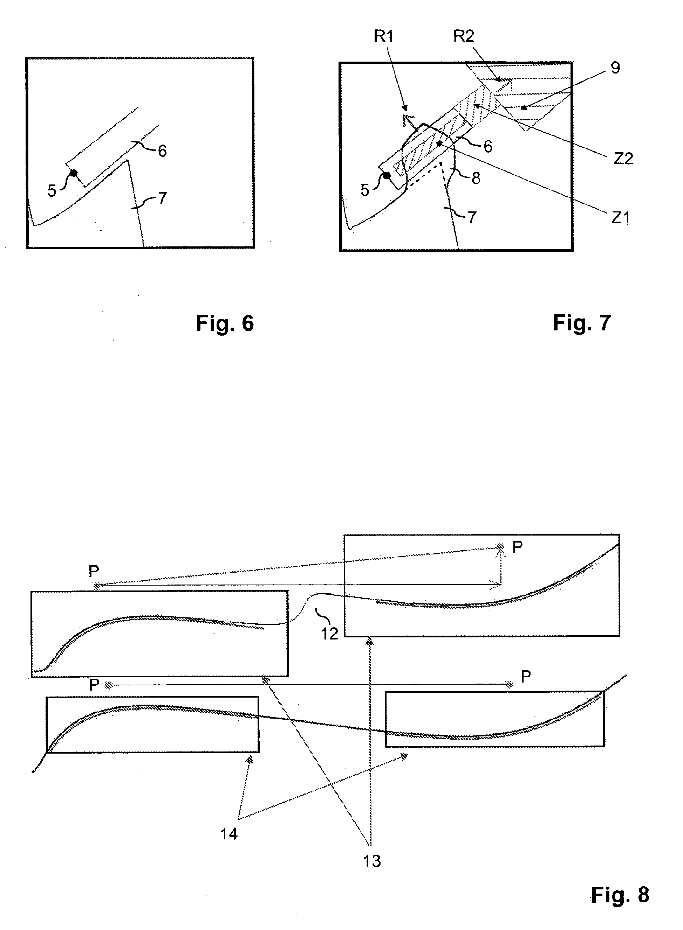

Anschließend können die Verfahrensschritte S7 und/oder S8 ausgeführt werden. Das Vorgehen in diesen Verfahrensschritten ist auch in den Figuren 6 und 7 dargestellt. In Verfahrensschritt S7 wird eine Schnittmenge zwischen einer virtuell auf der angepassten Werkzeugbahn 5 positionierten Abbildung 6 des Werkzeuges (vgl. Fig. 6 und 7), insbesondere der Arbeitskontur des Werkzeugs, und dem digitalisierten Bauteilbereich, insbesondere mit dem abzutragenden Materialvolumen, erzeugt. In Verfahrensschritt S8 wird eine Schnittmenge zwischen einer virtuell auf der angepassten Werkzeugbahn 5 positionierten Abbildung 6 des Werkzeuges, insbesondere der Störkontur des Werkzeugs, und dem digitalisierten Bauteilbereich, insbesondere mit Bauteilkonturen des digitalisierten Bauteilbereichs, erzeugt. In Abhängigkeit von den in den Verfahrensschritten S7 und/oder S8 erhaltenen Ergebnissen kann anschließend eine bedarfsgerechte Überarbeitung der angepassten Werkzeugbahn 5 erfolgen (Verfahrensschritt S9).

Fig. 6 zeigt einen zweidimensionalen (2D) Schnitt durch den digitalisierten Bauteilbereich mit einer angepassten Werkzeugbahn 5, die senkrecht zur Schnittebene verläuft, einer virtuellen Abbildung 6 des Werkzeugs auf der angepassten Werkzeugbahn 5 und eine geschnittene Bauteilkontur 7. Im in Fig. 6 dargestellten 2D-Schnitt kommt es zu keiner positiven Schnittmenge zwischen der virtuell auf der angepassten Werkzeugbahn 5 positionierten Abbildung 6 des Werkzeuges und Bauteilkonturen 7 des digitalisierten Bauteilbereichs. Damit wird in der in Fig. 6 dargestellten Schnittebene kein Material entfernt.

Fig. 7 zeigt ebenfalls einen 2D-Schnitt durch den digitalisierten Bauteilbereich mit einer angepassten Werkzeugbahn 5, die senkrecht zur Schnittebene verläuft, einer virtuellen Abbildung 6 des Werkzeugs auf der angepassten Werkzeugbahn 5 und eine geschnittene Bauteilkontur 7. Daneben ist in diesem Schnitt ein abzutragendes Materialvolumen 8 in Form eines Grates vorhanden. Im in Fig. 7 dargestellten 2D-Schnitt kommt es zu einer positiven Schnittmenge zwischen der virtuell auf der angepassten Werkzeugbahn 5 positionierten Abbildung 6 des Werkzeuges und dem abzutragendem Materialvolumen 8.

Wird eine solche positive Schnittmenge festgestellt, kann eine Berechnung der Größe der Schnittmenge durchgeführt wird. Anschließend kann in Verfahrensschritt S9 eine bedarfsgerechte Überarbeitung der angepassten Werkzeugbahn erfolgen. Insbesondere können Bearbeitungsparameter zur Abtragung des Materialvolumens, wie der Vorschub des Werkzeuges und/oder die Geschwindigkeit des Werkzeuges, in Abhängigkeit von der Größe der Schnittmenge festgelegt werden.

Falls die Größe der Schnittmenge einen vorgegebenen Wert übersteigt, kann mindestens eine weitere Werkzeugbahn erzeugt werden, die in einer vorgegebenen Richtung versetzt zur angepassten Werkzeugbahn verläuft und die zeitlich vor der angepassten Werkzeugbahn 5 vom Werkzeug abgefahren wird.

Auch kann das Werkzeug durch ein weiteres Werkzeug ersetzt wird, falls die Größe der Schnittmenge einen vorgegebenen Wert übersteigt.

Daneben ist in Fig. 7 eine Störkontur 9 eingezeichnet. Bei dieser Störkontur 9 handelt es sich beispielsweise um weitere Bauteilkonturen des digitalisierten Bauteilbereichs oder um eine virtuelle Abbildung andere Objekte im Arbeitsbereich, mit denen das Werkzeug eventuell kollidieren könnte. In Verfahrensschritt S8 wird eine Schnittmenge zwischen der virtuell auf der angepassten Werkzeugbahn 5 positionierten Abbildung 6 des Werkzeuges und Bauteilkonturen bzw. Störkonturen 9 des digitalisierten Bauteilbereichs erzeugt. Wird hierbei ein positiver Wert für die Schnittmenge festgestellt, kann das Werkzeug durch ein weiteres Werkzeug ersetzt werden.

Des Weiteren kann bei Überschreitung einer bestimmten Eintauchtiefe (Zone Z1) das Werkzeug in die Richtung R1, um den Eintauchabstand versetzt und anschließend erneut eine Schnittmenge gebildet werden. Bei Überschreitung des maximalen Eingriffbereichs (zur Erkennung des maximalen Eingriffbereichs dient Zone Z2) wird das Werkzeug entsprechend der zugeordneten Fluchtrichtung in die Richtung R2 versetzt.

In Verfahrensschritt S10 erfolgt eine Plausibilitätsprüfung der angepassten Werkzeugbahn 5, insbesondere in Hinblick auf die Größe der Verschiebung.

In Verfahrensschritt S11 wird die angepasste Werkzeugbahn 5 in ein ausführbares Maschinenprogramm zur Steuerung des Werkzeugs übertragen. Da Werkzeugbahnen im Allgemeinen neben Lageinformationen auch Informationen hinsichtlich der Orientierung des Werkzeugs (z.B. Anstellwinkel) zugeordnet sind, kann hierbei die Orientierung des Werkzeugs relativ zur angepassten Werkzeugbahn 5 der Orientierung des Werkzeugs an der korrespondierenden Soll-Werkzeugbahn entsprechen. Anschließend kann das Werkzeug entsprechend der Befehle des Maschinenprogramms verfahren werden. Damit wird die angepasste Werkzeugbahn 5 an eine Maschinensteuerung übergeben und von dieser im Anschluss mit den jeweils entsprechend individuell ausgewählten Werkzeugen bearbeitet.

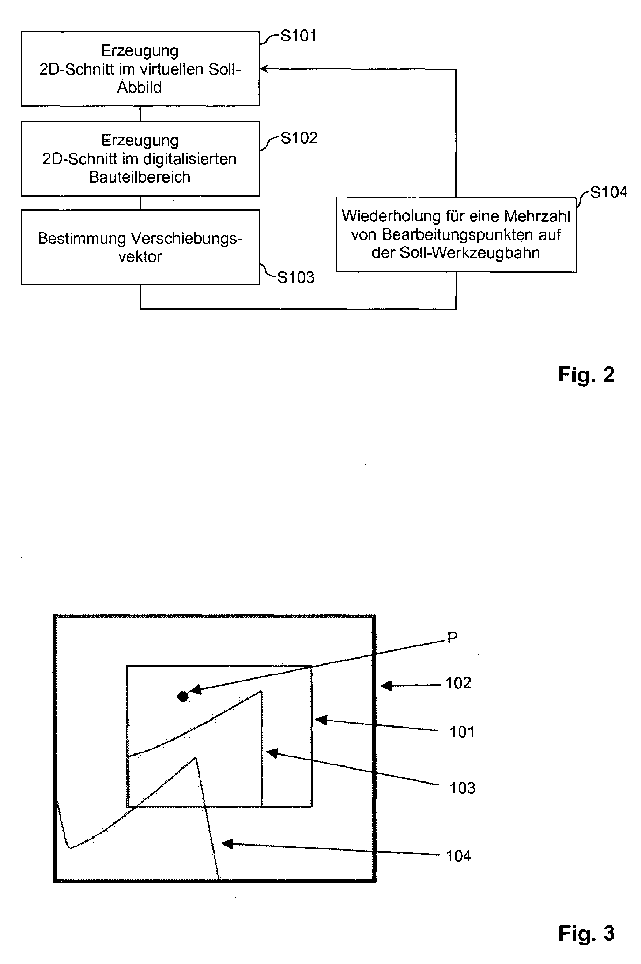

Fig. 2 zeigt die erfindungsgemäße Bestimmung der angepassten Werkzeugbahn 5. Dabei erfolgt in Verfahrensschritt S101 zunächst eine Erzeugung eines 2D-Schnitts 101 im virtuellen Soll-Abbild 2. Dieser 2D-Schnitt 101 wird im virtuellen Soll-Abbild 2 durch einen Punkt P (vgl. Fig. 3) auf der Soll-Werkzeugbahn senkrecht zur Soll-Werkzeugbahn generiert. In Verfahrensschritt S102 wird ein 2D-Schnitt 102 durch den digitalisierten Bauteilbereich in einer zum 2D-Schnitt 101 im virtuellen Soll-Abbild 2 korrespondierenden Schnittebene erzeugt. Aus der Orientierung zwischen dem Umgebungsbereich des digitalisierten Bauteilbereichs und dem korrespondierenden Ausschnitt des virtuellen Soll-Abbilds 2 zueinander wird ein Verschiebungsvektor bestimmt (Verfahrensschritt S103). Die Verfahrensschritte S101 bis S103 werden für eine Mehrzahl von Punkten entlang der Soll-Werkzeugbahn wiederholt (Verfahrensschritt S104). Auf diese Weise ergibt sich für jeden Bearbeitungspunkt ein individueller Verschiebungsvektor 3, um den der Soll-Bearbeitungspunkt verschoben wird. Werden die Verfahrensschritte S101 bis S103 für alle Bearbeitungspunkte der Soll-Werkzeugbahn durchgeführt, erhält man eine angepasste Werkzeugbahn 5, deren jeweiligen Bearbeitungspunkte individuell um den entsprechenden Verschiebungsvektor 3 im Vergleich zum korrespondierenden Soll-Bearbeitungspunkt verschoben sind.

Fig. 3 zeigt zur Visualisierung des Vorgehens einen 2D-Schnitt 101 des virtuellen Soll-Abbilds 2 mit einem Punkt P auf der Soll-Werkzeugbahn und einer geschnittenen Bauteilkontur 103 im Umgebungsbereich des Soll-Abbilds 2. Da der 2D-Schnitt 101 senkrecht zur Soll-Werkzeugbahn ausgeführt wurde, erstreckt sich die Soll-Werkzeugbahn senkrecht zur Zeichnungsebene. Der 2D-Schnitt 102 durch den digitalisierten Bauteilbereich in einer zum 2D-Schnitt 101 korrespondierenden Schnittebene zeigt die korrespondierende geschnittene Bauteilkontur 104. Beispielsweise durch eine Mustersuche können nun die beiden 2D-Schnitt 101 und 102 in Übereinstimmung gebracht werden. Werden die beiden 2D-Schnitt 101 und 102 durch ein Verfahren zur Mustersuche in Übereinstimmung gebracht, dann stellt der 2D-Schnitt 102 durch den digitalisierten Bauteilbereich einen Suchbereich und 2D-Schnitt 101 des virtuellen Soll-Abbilds 2 einen Musterbereich dar. Das Suchmuster entspricht der geschnittenen Bauteilkontur 103. Die Werte der hierbei ermittelten Lage- und Verdrehabweichung zwischen den Schnitten stellt dabei den Verschiebungsvektor 3 für diese Schnittebene dar.

Hierbei ist zu berücksichtigen, dass zur Ermittlung der Lage- und Verdrehabweichung in vorteilhafter Weise nicht beide Gesamtschnitte verwendet werden, sondern Bauteilkonturen des Umgebungsbereichs. Insbesondere sollten Bauteilkonturen verwendet werden, die mit einer hohen Wahrscheinlichkeit keine Oberflächenfehler oder Ungenauigkeiten aufweisen. Wird ein Verfahren zur Mustersuche verwendet, sollte die Größe der Suchfelder bzw. des Suchbereichs so groß gewählt werden, dass Bauteilkonturen mit eingeschlossen sind, die mit einer hohen Wahrscheinlichkeit keine Oberflächenfehler oder Ungenauigkeiten aufweisen.

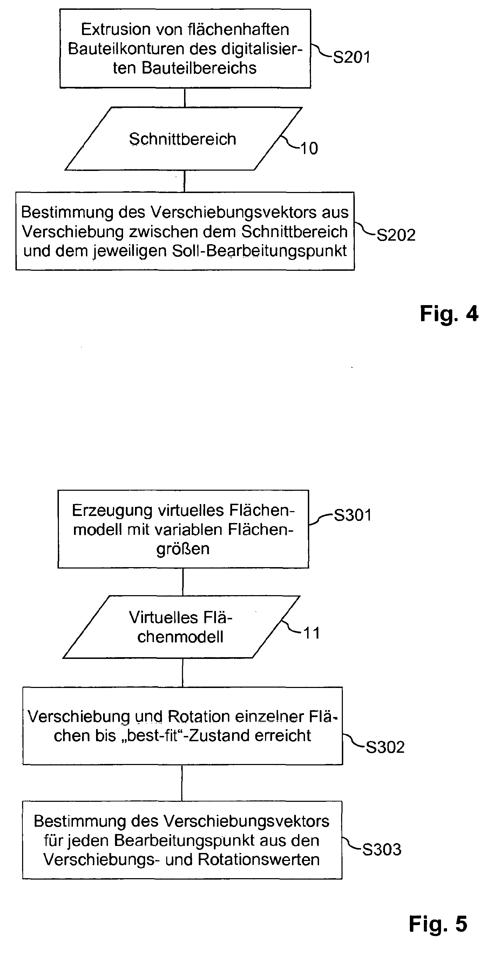

Fig. 4 zeigt ein Flussdiagramm, das eine erste Variante zur Bestimmung der angepassten Werkzeugbahn visualisiert. In Verfahrensschritt S201 wird ein virtuelles Flächenmodell dadurch erzeugt, dass flächenhafte Bauteilkonturen, die im digitalisierten Bauteilbereich das zu entfernende Materialvolumen umschließen, derart virtuell extrudiert werden, dass diese einen Schnittbereich 10 bilden. Anschließend wird aus der Lageabweichung des Schnittbereichs 10 relativ zum entfernenden Materialvolumen aus dem virtuellen Soll-Abbild 2 der Verschiebungsvektor 3 erzeugt (Verfahrensschritt S202).

In vorteilhafter Weise kann die erste Variante zur Bestimmung der angepassten Werkzeugbahn 5 verwendet werden, wenn das zu entfernende Material eine Fase oder ein Grat an einer Bauteilkante ist. Hierbei können flächenhafte Bauteilkonturen des digitalisierten Bauteilbereichs, die an die Fase bzw. den Grat angrenzen, in Richtung der Fase bzw. des Grates extrudiert, d.h. extrapoliert, werden. Dadurch ergibt sich ein linienhafter Schnittbereich 10. Die Lage dieses Schnittbereichs 10 wird dann mit der Lage der Fase im virtuellen Soll-Abbild 2 verglichen. Aus der Lagedifferenz dieser beiden Elemente wird anschließend der Verschiebungsvektor 3 für jeden Bearbeitungspunkt bestimmt.

Fig. 5 visualisiert eine zweite Variante zur Bestimmung der angepassten Werkzeugbahn 5. In Verfahrensschritt S303 wird ein virtuelles Flächenmodell 11 basierend auf einem Ausschnitt aus dem virtuellen Soll-Abbild 2, wobei das Flächenmodell 11 variierbare Flächengrößen und elastische Verbindungsbereiche zwischen den einzelnen Flächen aufweist, erzeugt. In Verfahrensschritt S302 erfolgt eine Verschiebung und Rotation einzelner Flächen des Flächenmodells 11 bis eine größtmögliche Übereinstimmung zwischen dem Flächenmodell 11 und dem digitalisierten Bauteilbereich erreicht ist. Dieser Zustand wird auch "best-fit"-Zustand genannt. In Verfahrensschritt S303 wird der Verschiebungsvektor 3 für jeden Bearbeitungspunkt aus den aus dem "best-fit"-Zustand erhaltenen Verschiebungs- und Rotationswerten der einzelnen Flächen ermittelt.

In einer besonders bevorzugten Ausführungsform der zweiten Variante zur Bestimmung der angepassten Werkzeugbahn wird das virtuelle Soll-Abbild 2 in mehrere Bearbeitungs-Teilbereiche aufgeteilt. Diese Teilbereiche bestehen wiederum aus einzelnen Flächen. Diese Flächen sind hinsichtlich ihrer Form in gewissen, festzulegenden Toleranzbereichen flexibel/anpassungsfähig. Des Weiteren sind diese Flächen eines Teilbereiches auch miteinander verbunden, so dass sich die Fläche des entsprechenden Teilbereiches ergibt. Die Verbindung dieser einzelnen Flächenstücke des Bearbeitungsteilbereiches ist allerdings nicht fest, sondern in gewissen, festzulegenden Bereichen wiederum begrenzt elastisch. Hierdurch erhält die Teiloberfläche eine definierte Elastizität. Diese Elastizität wird verwendet um diese Bearbeitungsteilbereiche bestmöglich mit dem Ist-Modell in Übereinstimmung zu bringen (= elastischer Ist-Bearbeitungsteilbereich). Anhand der Verschiebung und Rotation der einzelnen Flächenelemente des Ist-Teilbereiches in Bezug auf den Sollbereich, wird die Soll-Werkzeugbahn entsprechend an den digitalisierten Bauteilbereich angepasst.

Fig. 8 zeigt eine Darstellung, die ein Verfahren zum Abtragen von Materialvolumen bei einer unerwünschten Bauteilstufe unter Zuhilfenahme eines Mustersuch-Verfahrens visualisiert. Solche Bauteilstufen können beispielsweise auf einen Formversatz zurückzuführen sein. Im digitalisierten Bauteilabschnitt (in Fig. 8 oben dargestellt) ist eine derartige Stufe 12 vorhanden. Es werden für den Bereich, in dem eine Stufe erwartet wird, zwei Soll-Werkzeugbahnen definiert. Diesen Soll-Werkzeugbahnen ist jeweils ein 2D-Schnitt 13 des virtuellen Soll-Abbilds 2 zugeordnet. Der Kantenverlauf des virtuellen Soll-Abbilds in jedem dieser 2D-Schnitte dient als Suchmuster. D.h. es werden zwei Suchmuster verwendet. Hiernach wird der digitalisierte Bauteilbereich in den beiden Suchfeldern 14 durchsucht. Anhand der Lage der beiden verschieden verschobenen Punkte P auf den Soll-Werkzeugbahnen kann die Anstellung des Werkzeuges ermittelt werden.

Die oben beschriebenen Ausführungsbeispiele beschreiben das Verfahren anhand einer einzelnen angepassten Werkzeugbahn 5. Es ist jedoch möglich, die entsprechenden Verfahrensschritte jeweils für eine Vielzahl von Werkzeugbahnen durchzuführen. Auch ist es möglich, mehrere zu entfernende Materialvolumina mit dem beschriebenen Verfahren abzutragen. In den Figuren nicht dargestellt ist das im Folgenden beschriebene Verfahren zur Bestimmung, an welcher Stelle sich ein zu entfernendes Bauteilvolumen befindet. Diese Bestimmung erfolgt vorteilhafterweise zeitlich vor den weiter oben beschriebenen Verfahrensschritten zum automatischen Abtragen. Hierzu wird zunächst das gesamte Bauteil digitalisiert. Dieses digitalisierte Gesamtbauteil 4 wird eingelesen, d.h. erfasst. Anschließend erfolgt ein Vergleich des digitalisierten Gesamtbauteils 4 mit dem virtuellen Soll-Abbild 2. Danach erfolgt eine Identifizierung einer oder mehrerer Abweichungen zwischen dem digitalisierten Gesamtbauteil 4 und dem virtuellen Soll-Abbild 2. Falls eine dieser Abweichungen eine vorgegebene Größe überschreitet, wird diese Abweichung als zu entfernendes Materialvolumen bestimmt.

In einem weiteren Ausführungsbeispiel wird das Verfahren zum automatischen Abtragen eines Materialvolumens verwendet, um Planetenträger zu entgraten. Hierzu wird ein Planetenträger auf eine Dreheinheit gesetzt und fest gespannt. Mit einem Scanner, der nach dem Lichtstreifenprojektionsprinzip misst, wird der Planetenträger von mehreren Positionen aus gescannt (entspricht dem Verfahrensschritt S3). Das Ergebnis des Scannvorgangs ist ein Datensatz, welcher das Bauteil als Flächenmodell beschreibt (entspricht dem digitalisierten Gesamtbauteil 4). Über ein Best-Fit wird dieses Flächenmodell in Übereinstimmung mit einem der Bearbeitungsmaschine (in diesem Beispiel wird ein Roboter verwendet) bekannten Koordinatensystem gebracht. Anschließend werden angepasste Werkzeugbahnen 5 erzeugt. Angepasst an die Größe des Grates werden ggf. mehrere Bahnen verwendet um den Grat abzutragen (Verfahrensschritt S9). Entsprechend der Schnittmenge aus Fräser und abzutragendem Material wird des Weiteren die Bearbeitungsgeschwindigkeit ausgewählt (Verfahrensschritt S9). Die vom Programm ermittelte angepasste Werkzeugbahn 5 wird nun in ein Format konvertiert, welches vom Roboter verarbeitbar ist und an selbigen übertragen (Verfahrensschritt S11).

Der Roboter bearbeitet nun entsprechend der Programmvorgaben mit dem jeweils am besten geeigneten Werkzeug (welches er von einer Werkzeugwechselstation holt) und den entsprechenden Bearbeitungsparameter den Planetenträger (Verfahrensschritt S12). Nach erfolgter Bearbeitung kann der Planetenträger von der Drehvorrichtung entnommen und durch einen neuen, zu bearbeitenden Planetenträger ausgetauscht werden.

Ferner ist es möglich, die angepassten Werkzeugbahnen 5 vor der Übertragung in ein ausführbares Maschinenprogramm nachzubearbeiten. Insbesondere wären Nachbearbeitungen wie die Ermittlung von zusammenhängenden Geschwindigkeitsbereichen, die Ermittlung von zusammenhängenden Iterationsbereichen, das Glätten eines Bahnoffsets und/oder das Erzeugen fehlender Bearbeitungspunkte durch Extrapolation vorteilhaft.

Durch die adaptiv erzeugten angepassten Werkzeugbahnen 5 können Bauteile automatisch unter Berücksichtigung ihrer tatsächlichen Geometrie bearbeitet werden. Hierdurch sinkt - verglichen mit dem manuellen Bearbeiten - der Zeitaufwand, wodurch eine Kostenreduzierung erreicht wird. Da das manuelle Bearbeiten der Bauteile teilweise unter sehr unergonomischen Arbeitsbedingungen stattfindet, die Bearbeitungswerkzeuge sehr schwer sind, die Arbeiter den Bearbeitungskräften entgegen wirken müssen und je nach Bearbeitungsprozess einer hohen Staubbelastung ausgesetzt sind, verbessern sich durch den automatisierten Bearbeitungsprozess mittels angepasster Werkzeugbahnen 5 die Arbeitsbedingungen der Arbeiter stark.

### BEZUGSZEICHENLISTE

- 1: CAD-Modell
- 2: Virtuelles Soll-Abbild
- 3: Verschiebungsvektor
- 4: Digitalisiertes Gesamtbauteil
- 5: Angepasste Werkzeugbahn
- 6: virtuelle Abbildung des Werkzeugs
- 7: Bauteilkontur
- 8: abzutragendes Materialvolumen
- 9: Störkontur
- 10: Schnittbereich
- 11: Virtuelles Flächenmodell
- 12: Stufe
- 13: 2D-Schnitte
- 14: Suchfelder
- 101: 2D-Schnitt aus virtuellem Soll-Abbild
- 102: 2D-Schnitt aus digitalisiertem Bauteilbereich
- 103: Bauteilkontur
- 104: Bauteilkontur
- P: Punkt auf Soll-Werkzeugbahn
- R1: Richtung 1
- R2: Richtung 2
- Z1: Zone 1
- Z2: Zone 2

## Patentansprüche

1. Verfahren zum automatischen Abtragen mindestens eines Materialvolumens eines Bauteils durch ein maschinengesteuertes Werkzeug, das sich entlang einer vorgegebenen Werkzeugbahn mit einer Mehrzahl von Bearbeitungspunkten bewegt, mit folgenden Verfahrensschritten:
- Erfassen eines virtuellen Soll-Abbildes (2) des Bauteils mit mindestens einer Soll-Werkzeugbahn mit einer Mehrzahl von Soll-Bearbeitungspunkten zur Abtragung des Materialvolumens;
- Erfassen eines digitalisierten Bauteilbereichs, der mindestens das abzutragende Materialvolumen und einen daran angrenzenden Umgebungsbereich des Bauteils umfasst;
- Bestimmen eines Verschiebungsvektors (3) für jeden Bearbeitungspunkt
- Bestimmen einer angepassten Werkzeugbahn (5) durch Anwendung des Verschiebungsvektors (3) auf den jeweiligen Bearbeitungspunkt;
**dadurch gekennzeichnet, dass** der Verschiebungsvektor (3) ein Datensatz ist, der die Lageabwelchung zwischen dem Umgebungsbereich des digitalisierten Bauteilbereichs und einem korrespondierenden Ausschnitt aus dem virtuellen Soll-Abbild (2) am Soll-Bearbeitungspunkt wiedergibt; und wobei die angepasste Werkzeugbahn (5) durch folgende Verfahrensschritte bestimmt wird:
a) Erzeugung eines zweidimensionalen Schnitts (101) im virtuellen Soll-Abbild (2) durch einen Punkt auf der Soll-Werkzeugbahn senkrecht zur Soll-Werkzeugbahn, wobei eine geschnittene Bauteilkontur (103) als Umgebungsbereich des Soll-Abbilds (2) entsteht;
b) Erzeugen eines zweidimensionalen Schnitts (102) durch den digitalisierten Bauteilbereich in einer zum Schnitt aus dem Verfahrensschritt a) korrespondierenden Schnittebene, wobei eine korrespondierende geschnittene Bauteilkontur (104) als Umgebungsbereich des digitalisierten Bauteilbereichs entsteht;
c) Bestimmung des Verschiebunasvektors für jeden Bearbeitungspunkt als Verschiebung zwischen dem Umgebungsbereich aus Verfahrensschritt b) und dem Umgebungsbereich aus Verfahrensschritt a):
d) Wiederholen der Verfahrensschritte a) bis c) für eine Mehrzahl von Soll-Bearbeitungspunkten entlang der Soll-Werkzeugbahn.

2. Verfahren nach Anspruch 1 mit folgendem zusätzlichen Verfahrensschritt:
- Erzeugung einer Schnittmenge zwischen einer virtuell auf der angepassten Werkzeugbahn (5) positionierten Abbildung des Werkzeuges (6) und dem abzutragenden Materialvolumen (8) des digitalisierten Bauteilbereichs.

3. Verfahren nach Anspruch 2, wobei die Bearbeitungsparameter zur Abtragung des Materialvolumens, insbesondere der Vorschub des Werkzeuges und/oder die Drehzahl des Werkzeuges, in Abhängigkeit von der Größe der Schnittmenge bestimmt werden.

4. Verfahren nach einem der Ansprüche 2 oder 3, wobei, falls die Größe der Schnittmenge einen vorgegebenen Wert übersteigt, mindestens eine weitere Werkzeugbahn erzeugt wird, die die in einer vorgegebenen Richtung versetzt zur angepassten Werkzeugbahn (5) verläuft und die zeitlich vor der angepassten Werkzeugbahn (5) vom Werkzeug abgefahren wird.

5. Verfahren nach einem der Ansprüche 2 bis 4, wobei das Werkzeug durch ein weiteres Werkzeug ersetzt wird, falls die Größe der Schnittmenge einen vorgegebenen Wert übersteigt.

6. Verfahren nach einem der vorhergehenden Ansprüche mit folgenden zusätzlichen Verfahrensschritten:
- Erzeugung einer Schnittmenge zwischen einer virtuell auf der angepassten Werkzeugbahn positionierten Abbildung des Werkzeuges (6) und einer Störkontur (9) des digitalisierten Bauteilbereichs;
- Ersetzen des Werkzeugs durch ein weiteres Werkzeug, falls der vorhergehende Verfahrensschritt einen positiven Wert für die Schnittmenge liefert.

7. Verfahren nach einem der vorhergehenden Ansprüche, wobei die Orientierung des Werkzeugs relativ zur angepassten Werkzeugbahn (5) der Orientierung des Werkzeugs an der korrespondierenden Soll-Werkzeugbahn entspricht.

8. Verfahren nach einem der vorhergehenden Ansprüche, wobei eine Plausibilitätsprüfung der angepassten Werkzeugbahn (5), insbesondere in Hinblick auf die Größe der Verschiebung, erfolgt.

9. Verfahren nach einem der vorhergehenden Ansprüche, mit folgenden zeitlich vorgelagerten zusätzlichen Verfahrensschritten:
- Erfassen eines digitalisierten Gesamtbauteils (4);
- Vergleichen des digitalisierten Gesamtbauteils mit dem virtuellen Soll-Abbild (2);
- Identifizierung einer Abweichung zwischen dem digitalisierten Gesamtbauteils (4) und dem virtuellen Soll-Abbild (2), die eine vorgegebene Größe überschreiten, als zu entfernendes Materialvolumen.

10. Verfahren zum automatischen Abtragen mehrere Materialvolumina, wobei für jedes abzutragende Materialvolumen eines der Verfahren nach einem der vorhergehenden Ansprüche durchgeführt wird.

11. Verfahren nach einem der vorhergehenden Ansprüche, wobei vor der Bestimmung des Verschiebungsvektors das Koordinatensystem des digitalisierten Gesamtbauteils (4) mit dem Koordinatensystem des virtuellen Soll-Abbildes (2) in Übereinstimmung gebracht wird.

12. Verfahren nach einem der vorhergehenden Ansprüche, wobei ein Verschiebungsvektor mindestens eines Zwischenbearbeitungspunktes, der auf der Werkzeugbahn zwischen zwei Bearbeitungspunkten liegt, durch Extrapolation der Verschiebungsvektoren benachbart liegender Bearbeitungspunkte bestimmt wird.

## Claims

1. Method for automatically removing at least one volume of material of a component by a machine-controlled tool which moves along a prescribed tool track having a plurality of processing points, having the following method steps:
- acquiring a virtual desired image (2) of the component with at least one desired tool track having a plurality of desired processing points for removing the volume of material;
- acquiring a digitized component region which includes at least the volume of material to be removed and a surrounding region of the component adjacent thereto;
- determining a displacement vector (3) for each processing point;
- determining an adjusted tool track (5) by applying the displacement vector (3) to the respective processing point;
**characterized in that** the displacement vector (3) is a data set which represents the deviation of the position between the surrounding region of the digitized component region and a corresponding section from the virtual desired image (2) at the desired processing point; and the adjusted tool track (5) is determined by the following method steps:
a) generating a two-dimensional section (101) in the virtual desired image (2) through a point on the desired tool track perpendicular to the desired tool track, the result being a cut component contour (103) as surrounding region of the desired image (2);
b) generating a two-dimensional section (102) through the digitized component region in a sectional plane corresponding to the section from the method step a), the result being a corresponding cut component contour (104) as surrounding region of the digitized component region;
c) determining the displacement vector for each processing point as a displacement between the surrounding region from method step b) and the surrounding region from method step a);
d) repeating the method steps a) to c) for a plurality of desired processing points along the desired tool track.

2. Method according to Claim 1, having the following additional method step:
- generating an intersection between an image, positioned virtually on the adjusted tool track (5), of the tool (6) and that volume (8) of material of the digitized component region which is to be removed.

3. Method according to Claim 2, in which the processing parameters for removing the volume of material, in particular the feeding of the tool and/or the rotation speed of the tool, are determined as a function of the size of the intersection.

4. Method according to either of Claims 2 and 3, in which if the size of the intersection exceeds a prescribed value, at least one further tool track is generated which runs in a prescribed direction offset from the adjusted tool track (5), and which is traversed by the tool ahead of the adjusted tool track (5) in time.

5. Method according to one of Claims 2 to 4, in which the tool is replaced by a further tool if the size of the intersection exceeds a prescribed value.

6. Method according to one of the preceding claims, having the following additional method steps:
- generating an intersection between an image, virtually positioned on the adjusted tool track, of the tool (6) and a disturbance contour (9) of the digitized component region;
- replacing the tool by a further tool if the preceding method step delivers a positive value for the intersection.

7. Method according to one of the preceding claims, in which the orientation of the tool relative to the adjusted tool track (5) corresponds to the orientation of the workpiece on the corresponding desired tool track.

8. Method according to one of the preceding claims, in which a plausibility check of the adjusted tool track (5) is performed, particularly with regard to the size of the displacement.

9. Method according to one of the preceding claims, having the following temporary preceding additional method steps:
- acquiring a digitized entire component (4);
- comparing the digitized entire component with the virtual desired image (2);
- identifying a deviation between the digitized entire component (4) and the virtual desired image (2), which exceed a prescribed size, as the volume of material to be removed.

10. Method for automatically removing a plurality of volumes of material, in which one of the methods according to one of the preceding claims is carried out for each volume of material which is to be removed.

11. Method according to one of the preceding claims, in which before the determination of the displacement vector the coordinate system of the digitized entire component (4) is brought to coincide with the coordinate system of the virtual desired image (2).

12. Method according to one of the preceding claims, in which a displacement vector of at least one intermediate processing point which lies on the tool track between two processing points is determined by extrapolating the displacement vectors of adjacently situated processing points.

## Revendications

1. Procédé d'enlèvement automatique d'au moins un volume de matière d'un composant par un outil à commande mécanisée qui se déplace le long d'une trajectoire d'outil prédéfinie ayant une pluralité de points d'usinage, comprenant les étapes de procédé suivantes :
- capture d'une représentation de consigne (2) virtuelle du composant avec au moins une trajectoire d'outil de consigne incluant une pluralité de points d'usinage de consigne en vue de l'enlèvement du volume de matière ;
- capture d'une zone numérisée de composant, laquelle inclut au moins le volume de matière à enlever et une zone environnante du composant contiguë à celui-ci ;
- détermination d'un vecteur de translation (3) pour chaque point d'usinage ;
- détermination d'une trajectoire d'outil adaptée (5) en utilisant le vecteur de translation (3) sur le point d'usinage correspondant ;
**caractérisé en ce que** le vecteur de translation (3) est un jeu de données qui reproduit l'écart de position entre la zone environnante de la zone numérisée du composant et une portion correspondante issue de la représentation de consigne (2) virtuelle sur le point d'usinage de consigne ; et
la trajectoire d'outil adaptée (5) étant déterminée par les étapes de procédé suivantes :
a) génération d'une coupe bidimensionnelle (101) dans la représentation de consigne (2) virtuelle à travers un point sur la trajectoire d'outil de consigne perpendiculairement à la trajectoire d'outil de consigne, un contour découpé du composant (103) étant produit en tant que zone environnante de la représentation de consigne (2) ;
b) génération d'une coupe bidimensionnelle (102) à travers la zone numérisée du composant dans un plan de coupe correspondant à la coupe de l'étape de procédé a), un contour découpé correspondant du composant (104) étant produit en tant que zone environnante de la zone numérisée du composant ;
c) détermination du vecteur de translation pour chaque point d'usinage en tant que translation entre la zone environnante de l'étape de procédé b) et la zone environnante de l'étape de procédé a) ;
d) répétition des étapes de procédé a) à c) pour une pluralité de points d'usinage de consigne le long de la trajectoire d'outil de consigne.

2. Procédé selon la revendication 1, comprenant l'étape de procédé supplémentaire suivante :
- génération d'une intersection entre une représentation de l'outil (6) positionnée virtuellement sur la trajectoire d'outil adaptée (5) et le volume de matière (8) à enlever de la zone numérisée du composant.

3. Procédé selon la revendication 2, selon lequel les paramètres d'usinage pour l'enlèvement du volume de matière, notamment l'avance de l'outil et/ou la vitesse de rotation de l'outil, sont déterminés en fonction de la taille de l'intersection.

4. Procédé selon l'une des revendications 2 ou 3, selon lequel, si la taille de l'intersection dépasse une valeur prédéfinie, au moins une trajectoire d'outil supplémentaire est générée, laquelle s'étend dans une direction prédéfinie décalée par rapport à la trajectoire d'outil adaptée (5) et qui est parcourue par l'outil temporellement avant la trajectoire d'outil adaptée (5).

5. Procédé selon l'une des revendications 2 à 4, selon lequel l'outil est remplacé par un outil supplémentaire si la taille de l'intersection dépasse une valeur prédéfinie.

6. Procédé selon l'une des revendications précédentes, comprenant les étapes de procédé supplémentaires suivantes :
- génération d'une intersection entre une représentation de l'outil (6) positionnée virtuellement sur la trajectoire d'outil adaptée et un contour parasite (9) de la zone numérisée du composant ;
- remplacement de l'outil par un outil supplémentaire si l'étape de procédé précédente produit une valeur positive pour l'intersection.

7. Procédé selon l'une des revendications précédentes, selon lequel l'orientation de l'outil par rapport à la trajectoire d'outil adaptée (5) correspond à l'orientation de l'outil sur la trajectoire d'outil de consigne correspondante.

8. Procédé selon l'une des revendications précédentes, selon lequel un contrôle de plausibilité de la trajectoire d'outil adaptée (5) est effectué, notamment du point de vue de la valeur de la translation.

9. Procédé selon l'une des revendications précédentes, comprenant les étapes de procédé supplémentaires suivantes en avance dans le temps :
- capture d'un composant entier numérisé (4) ;
- comparaison du composant entier numérisé avec la représentation de consigne (2) virtuelle ;
- identification d'un écart entre le composant entier numérisé (4) et la représentation de consigne (2) virtuelle, qui dépasse une grandeur prédéfinie, en tant que volume de matière à enlever.

10. Procédé d'enlèvement automatique de plusieurs volumes de matière, selon lequel l'un des procédés selon l'une des revendications précédentes est mis en oeuvre pour chaque volume de matière à enlever.

11. Procédé selon l'une des revendications précédentes, selon lequel, avant la détermination du vecteur de translation, le système de coordonnées du composant entier numérisé (4) est amené en coïncidence avec le système de coordonnées de la représentation de consigne (2) virtuelle.

12. Procédé selon l'une des revendications précédentes, selon lequel un vecteur de translation d'au moins un point d'usinage intermédiaire, qui se trouve sur la trajectoire d'outil entre deux points d'usinage, est déterminé par extrapolation des vecteurs de translation de points d'usinage adjacents.
